# EUROPÄISCHE PATENTSCHRIFT

(11) **EP 2 117 889 B1**
(45) Veröffentlichungstag und Bekanntmachung des Hinweises auf die Patenterteilung: **08.08.2012**
(21) Anmeldenummer: 07847780.9
(22) Anmeldetag: 04.12.2007
(51) Int. Cl.: B60S 1/08

(54) **MOTORISCHE ANTRIEBSEINHEIT FÜR EINE SCHEIBENWISCHVORRICHTUNG IN EINEM FAHRZEUG**
MOTORIZED DRIVE UNIT FOR A WIPER DEVICE IN A VEHICLE
UNITÉ D'ENTRAÎNEMENT MOTORISÉE POUR DISPOSITIF D'ESSUIE-GLACE D'UN VÉHICULE

(30) Priorität: 06.02.2007 DE 102007005770; 29.12.2006 DE 102006061950
(43) Veröffentlichungstag der Anmeldung: 18.11.2009
(73) Patentinhaber: Robert Bosch GmbH, 70442 Stuttgart (DE)
(72) Erfinder: HUESGES, Mario, 77830 Buehlertal (DE); LAUK, Detlef, 77871 Renchen (DE); GEUBEL, Paul, 76534 Baden-Baden (DE)
(86) Internationale Anmeldenummer: PCT/EP2007/063278
(87) Internationale Veröffentlichungsnummer: WO 2008/095559

(56) Entgegenhaltungen:
- EP-A- 0 326 088
- EP-A- 1 335 481
- JP-A- 9 275 645
- JP-A- 60 153 109
- JP-A- 2003 047 224
- US-A- 4 532 449

## Beschreibung

Die Erfindung bezieht sich auf eine motorische Antriebseinheit für eine Scheibenwischvorrichtung in einem Fahrzeug nach dem oberbegriff der Ansprüche 1 und 8.

### Stand der Technik

In der DE 10 2004 005 067 A1 wird eine Scheibenwischvorrichtung für ein Kraftfahrzeug beschrieben, die von einem Elektromotor angetrieben wird, welcher in einem gemeinsamen Gehäuse mit einer Getriebeeinheit sitzt, über die die Ankerbewegung des Elektromotors auf eine Abtriebswelle zur Betätigung eines Wischerarms übertragen wird.

Aufgrund beengter Platzverhältnisse insbesondere bei Heckscheibenwischvorrichtungen ist man bestrebt, klein dimensionierte Antriebseinheiten auszubilden, wofür Heckwischermotoren mit geringem Durchmesser und geringer Länge eingesetzt werden sollen. Zudem müssen die Wischermotoren Mindestforderungen im Hinblick auf die Schockfestigkeit erfüllen und gegen äußere mechanische Belastungen gesichert sein.

Als Wischermotoren werden üblicherweise permanenterregte Gleichstrommotoren eingesetzt, die zwei Permanentmagnete auf der Gehäuseinnenwand eines Polgehäuses und einen im Polgehäuse drehbar gelagerten Anker mit einer elektrisch beaufschlagbaren Spulenwicklung umfasst. Ein derartiger, permanenterregter Gleichstrommotor wird beispielsweise in der DE 10 2004 008 936 A1 beschrieben. Der Anker umfasst einen Rückschlussring, der drehfest mit der Ankerwelle verbunden ist und an dem einstückig sich radial erstreckende Zahnhälse ausgebildet sind, um die jeweils eine Ringspule gewickelt ist. Bei Beaufschlagung mit Gleichstrom wird ein Magnetfeld in den Spulen erzeugt, welches mit dem Magnetfeld der Permanentmagnete, die an der Gehäuseinnenwand angeordnet sind, in Wechselwirkung tritt. Die beiden Permanentmagnete auf der Innenseite des Polgehäuses sind üblicherweise als Ferritmagnete ausgeführt, die einen verhältnismäßig großen Platzbedarf haben.

Die JP 2003 047224 A zeigt eine motorische Antriebseinheit in einer Scheibenwischvorrichtung mit zwei Permanentmagneten, die unmittelbar an der Innenseite des Polgehäuses anliegen.

Aus der EP 1 335 481 A ist es bekannt, direkt an der Innenwand des Polgehäuses insgesamt vier Permanentmagnete anzuordnen. Die EP 1 335 481 A offenbart des Weiteren, als Werkstoff für die Permanentmagnete Neodym-Eisen-Bor zu verwenden.

Aus der JP 09 275645 ist es bekannt, in einen Stator des Elektromotors Ausnehmungen zur Aufnahme von Permanentmagneten einzubringen.

### Offenbarung der Erfindung

Von diesem Stand der Technik ausgehend liegt der Erfindung die Aufgabe zugrunde, mit einfachen Maßnahmen eine klein bauende und widerstandsfähige motorische Antriebseinheit für eine Scheibenwischvorrichtung in einem Fahrzeug anzugeben.

Diese Aufgabe wird erfindungsgemäß mit den Merkmalen des Anspruches 1 gelöst. Die Unteransprüche geben zweckmäßige Weiterbildungen an.

Die erfindungsgemäße, motorische Antriebseinheit für eine Scheibenwischvorrichtung in einem Fahrzeug weist einen permanenterregten Gleichstrommotor auf, der einen in einem Polgehäuse drehbar gelagerten Anker mit mindestens einer elektrisch beaufschlagbaren Spulenwicklung umfasst sowie Permanentmagnete an der Gehäusewand des Polgehäuses. Des Weiteren ist eine Getriebeeinheit vorgesehen, über die der Anker des Gleichstrommotors mit einer Abtriebswelle gekoppelt ist, welche einen Wischerarm der Scheibenwischervorrichtung mit einer Dreh- bzw. Pendelbewegung betätigt. Der Anker ist üblicherweise als Innenläufer ausgeführt und im Polgehäuse aufgenommen, wobei grundsätzlich auch Ausführungen als Außenläufer in Betracht kommen.

Des Weiteren ist vorgesehen, dass der Gleichstrommotor mindestens vier Permanentmagnete an der Gehäusewand aufweist und dementsprechend mindestens vierpolig ausgebildet ist. Diese Ausführung weist im Unterschied zum Stand der Technik mit lediglich zwei Permanentmagneten an der Gehäuseinnenwand verschiedene Vorteile auf. So ist zum einen eine kleiner bauende Ausführung möglich, da aufgrund der besseren Flussverteilung, die durch die vier Permanentmagnete erreicht wird, die Wanddicke des Polgehäuses reduziert werden kann. Dadurch verringert sich der Außendurchmesser des Polgehäuses. Außerdem können bei gleicher elektrischer Leistung in Achsrichtung kürzere Bauteile im Gleichstrommotor verwendet werden, insbesondere kürzer bauende Anker und Magnete und ein entsprechend kürzeres Polgehäuse, so dass sich auch in Achsrichtung der erforderliche Bauraum verringert. Die reduzierte Wandstärke des Polgehäuses und der kürzer ausgebildete Anker sowie die entsprechend verkürzten Magnete führen außerdem zu einer Gewichtsreduzierung bei gleich bleibender Motorleistung.

Ein weiterer Vorteil liegt in der erhöhten Schockfestigkeit, da aufgrund des kürzer ausgebildeten Ankers der Massenschwerpunkt in Richtung der Befestigungsvorrichtungen am Gleichstrommotor verschoben wird. Dies führt in Verbindung mit dem reduzierten Gewicht bzw. reduzierter Massenträgheit zu einer geringeren mechanischen Rückwirkung des Gleichstrommotors auf die Befestigungsposition im Fahrzeug im Falle von schwingungs- bzw. impulsartigen Anregungen, denen die motorische Antriebseinheit ausgesetzt sein kann.

Mit der Vierpoltechnik entstehen geringere magnetische Verluste im Vergleich zur Zweipoltechnik, da die Flusswege im Magnetkreis verkürzt sind und eine entsprechende bessere Ausnutzung des Magnetflusses gegeben ist. Gegebenenfalls sind auch mehr als vier Pole vorgesehen, beispielsweise sechs oder acht Pole, falls die geometrischen Abmessungen im Motor dies zulassen.

Gemäß einer bevorzugten Weiterbildung wird als Magnetwerkstoff eine Seltenerd-Verbindung, vorzugsweise Neodym-Eisen-Bor (NdFeB) verwendet. Hierbei handelt es sich um einen dauermagnetischen Werkstoff, mit dem starke Magnetfelder bei kleinem Volumen der Magnete erzeugt werden können. Die Verwendung dieses Magnetwerkstoffes erlaubt aufgrund der höheren Energiedichte kürzere und dünnwandiger ausgebildete Magnete, die ein entsprechend geringeres Eigengewicht aufweisen. Zudem kann der Bauraum weiter reduziert werden.

Es kann zweckmäßig sein, insbesondere bei Verwendung von Neodym-Eisen-Bor als Magnetwerkstoff die Permanentmagnete mit einer Schutzschicht zu überziehen, um einer Zersetzung bei Kontakt mit Sauerstoff vorzubeugen. Zur Erzeugung einer Schutzschicht können beispielsweise die Permanentmagnete in einen Ring eingefügt werden, insbesondere einen aus Kunststoff gefertigten Ring, wobei die Permanentmagnete vollständig von dem Material des Ringes überzogen sind. Die Verwendung eines derartigen Ringes bietet zudem den Vorteil, dass die Permanentmagnete als vorgefertigte Einheit mit dem Ring im Gleichstrommotor eingebaut werden können.

Sofern die Permanentmagnete nicht vollständig vom Material des Ringes überzogen sind oder ohne einen derartigen Ring unmittelbar an der Gehäusewandung des Polgehäuses befestigt werden, kann bei Einsatz von Neodym-Eisen-Bor-Permanentmagneten eine separate Schutzschicht auf den Magneten vorteilhaft sein, die beispielsweise aus Nickel besteht.

Gemäß eines weiteren Aspektes der Erfindung ist eine motorische Antriebseinheit in einer Scheibenwischvorrichtung in einem Fahrzeug vorgesehen, die einen permanenterregten Gleichstrommotor aufweist, bestehend aus einem in einem Polgehäuse drehbar gelagerten Anker mit mindestens einer elektrisch beaufschlagbaren Spulenwicklung und mindestens zwei Permanentmagneten an der Gehäusewand des Polgehäuses, wobei der Anker über eine Getriebeeinheit mit einer Abtriebswelle gekoppelt ist, die einen Wischerarm betätigt. Für die mindestens zwei Permanentmagnete an der Gehäusewand, die in Wechselwirkung mit dem Anker stehen, wird als Magnetwerkstoff Neodym-Eisen-Bor (NdFeB) verwendet.

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht einer Heckscheibenwischvorrichtung mit motorischer Antriebseinheit in einem Fahrzeug,
- Fig. 2: einen Schnitt durch einen permanenterregten Gleichstrommotor der Antriebseinheit mit insgesamt vier auf der Polgehäuseinnenwand angeordneten Permanentmagneten,
- Fig. 3: eine schematische Darstellung der magnetischen Feldlinien zwischen dem Anker und dem Polgehäuse.

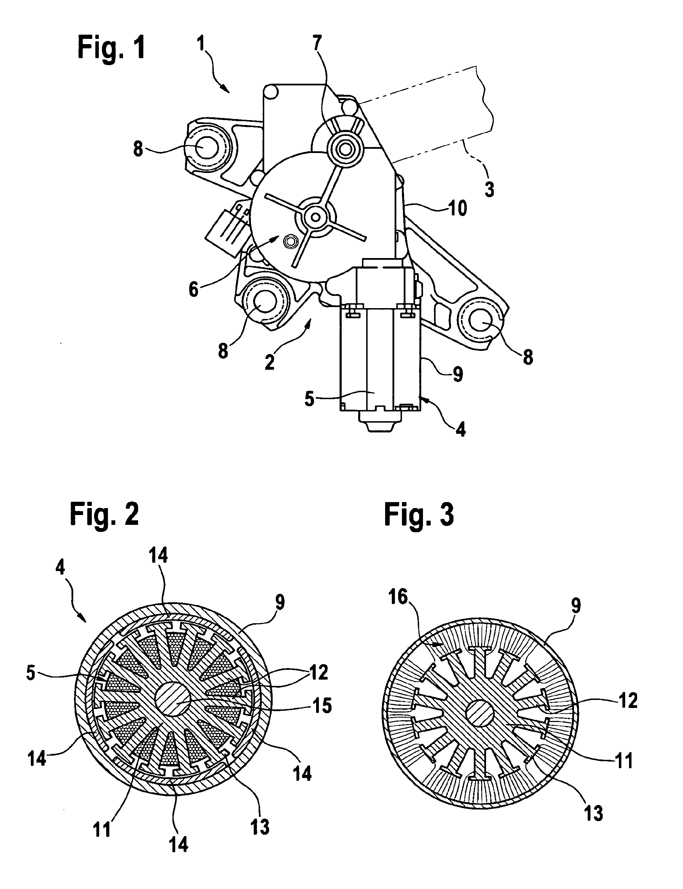

In Fig. 1 ist eine Heckscheibenwischvorrichtung 1 für ein Kraftfahrzeug dargestellt, die eine Antriebseinheit 2 zur Betätigung eines Wischerarmes 3 umfasst. Der Antriebseinheit 2 ist ein permanenterregter Gleichstrommotor 4 zugeordnet, dessen Anker 5 über eine Getriebeeinheit 6 eine Abtriebswelle 7 antreibt, an der der Wischerarm 3 befestigt ist. Bei einer Betätigung des Gleichstrommotors 4 wird die Abtriebswelle 7 und damit auch der Wischerarm in Dreh- bzw. Pendelschwingungen versetzt.

Der Gleichstrommotor 4 ist in einem Motor- bzw. Polgehäuse 9 aufgenommen, das einteilig mit einem Gehäuse 10 ausgebildet ist, welches die Getriebeeinheit 6 einschließlich der Abtriebswelle 7 aufnimmt. Das Gehäuse 9 und 10 ist über Befestigungsvorrichtungen 8 an einem karosseriefesten Bauteil des Fahrzeuges befestigt.

Wie der Schnittdarstellung nach Fig. 2 zu entnehmen, besteht der im Polgehäuse 9 aufgenommene Anker 5 aus einer Ankerwelle 15, auf der ein Tragring 11 befestigt ist, der mit einer Mehrzahl gleichmäßig über den Umfang verteilter, radial überstehender Ankerzähne 12 einstückig ausgebildet ist. Um die radial verlaufenden Ankerzähne 12 ist jeweils eine Spulenwicklung aufgewickelt. Auf der radialen Außenseite ist jeder Ankerzahn 12 mit einem Flussleitelement 13 versehen, die die Stirnfläche jedes Ankerzahns 12 bilden. Über die Flussleitelemente 13 wird eine verbesserte Leitung des magnetischen Flusses erreicht.

Auf der Gehäuseinnenwand sind insgesamt vier über den Umfang gleichmäßig verteilte Permanentmagnete 14 angeordnet, die jeweils zueinander auf Lücke liegen. Dementsprechend ist der Gleichstrommotor 4 als vierpoliger Motor ausgeführt. Die Permanentmagnete 14 sind im Ausführungsbeispiel unmittelbar an der Innenwand des Polgehäuses 9 gehalten, beispielsweise an der Innenwand angeklebt, sie können jedoch gemäß einer erfindungsgemäßen Ausführung auch in einen Ring eingesetzt werden, der beispielsweise aus Kunststoff besteht.

Die Permanentmagnete 14 bestehen aus einer Seltenerd-Verbindung und weisen eine hohe Energiedichte auf. Vorzugsweise wird als Magnetwerkstoff Neodym-Eisen-Bor (NdFeB) verwendet. Da im Vergleich zu Ferritmagneten ein stärkeres Magnetfeld mit den Neodym-Eisen-Bor-Permanentmagneten (bzw. den Seltenerd-Magneten) erzeugbar ist, genügt bei gleicher elektrischer Leistung des Gleichstrommotors eine kleinere Ausführung der Permanentmagnete 14. Dies ermöglicht es, dünnere Permanentmagnete vorzusehen, die außerdem auch in einem Polgehäuse mit kleinerem Durchmesser angeordnet werden können, wodurch sich auch in Umfangsrichtung gesehen die Länge der Permanentmagnete reduziert.

Der Werkstoff der Permanentmagnete kann sowohl isotrop als auch anisotrop ausgebildet sein.

Der schematischen Darstellung nach Fig. 3 ist der Verlauf des magnetischen Flusses zu entnehmen, der sich zwischen den Ankerzähnen 12 bzw. den Spulenwicklungen um die Ankerzähne 12 und den Permanentmagneten an der Innenwand des Polgehäuses 9 ausbildet. Da bei insgesamt vier Permanentmagneten die Pollücken im Vergleich zu Ausführungen mit nur zwei Permanentmagneten reduziert sind, bestehend entsprechend in Umfangsrichtung auch nur geringere Lücken im magnetischen Fluss 16, so dass auch die magnetischen Verluste geringer und zugleich die erzielbare Leistung verbessert ist.

## Patentansprüche

1. Motorische Antriebseinheit in einer Scheibenwischvorrichtung (1) in einem Fahrzeug, mit einem permanenterregten Gleichstrommotor (4), bestehend aus einem in einem Polgehäuse (9) drehbar gelagerten Anker (5) mit mindestens einer elektrisch beaufschlagbaren Spulenwicklung und Permanentmagneten (14) an der Gehäusewand des Polgehäuses (9), wobei der Anker (5) über eine Getriebeeinheit (6) mit einer Abtriebswelle (7) gekoppelt ist, die einen Wischerarm (3) betätigt,
**dadurch gekennzeichnet, dass** der Gleichstrommotor (4) mindestens vier Permanentmagnete (14) an der Gehäusewand aufweist, die in Wechselwirkung mit dem Anker (5) stehen und dass die Permanentmagnete (14) in einen Ring eingesetzt und vollständig in dem Ring eingeschlossen sind, der in das Polgehäuse (9) einsetzbar ist.

2. Antriebseinheit nach Anspruch 1,
**dadurch gekennzeichnet, dass** als Magnetwerkstoff Neodym-Eisen-Bor (NdFeB) verwendet wird.

3. Antriebseinheit nach Anspruch 1 oder 2,
**dadurch gekennzeichnet, dass** der Magnetwerkstoff isotrop ausgebildet ist.

4. Antriebseinheit nach Anspruch 1 oder 2,
**dadurch gekennzeichnet, dass** der Magnetwerkstoff anisotrop ausgebildet ist.

5. Antriebseinheit nach einem der Ansprüche 1 bis 4,
**dadurch gekennzeichnet, dass** die Permanentmagnete (14) in einen Kunststoffring eingesetzt sind.

6. Antriebseinheit nach einem der Ansprüche 1 bis 5,
**dadurch gekennzeichnet, dass** die Permanentmagnete (14) mit einer Schutzschicht überzogen sind, beispielsweise mit Nickel.

7. Antriebseinheit nach einem der Ansprüche 1 bis 6,
**dadurch gekennzeichnet, dass** die Permanentmagnete (14) dünnwandig ausgeführt sind.

8. Motorische Antriebseinheit in einer Scheibenwischvorrichtung (1) in einem Fahrzeug, insbesondere nach einem der Ansprüche 1 bis 7, mit einem permanenterregten Gleichstrommotor (4), bestehend aus einem in einem Polgehäuse (9) drehbar gelagerten Anker (5) mit mindestens einer elektrisch beaufschlagbaren Spulenwicklung und Permanentmagneten (14) an der Gehäusewand des Polgehäuses (9), wobei der Anker (5) über eine Getriebeeinheit (6) mit einer Abtriebswelle (7) gekoppelt ist, die einen Wischerarm (3) betätigt, wobei
der Gleichstrommotor (4) mindestens zwei Permanentmagnete (14) an der Gehäusewand aufweist, die in Wechselwirkung mit dem Anker (5) stehen, **dadurch gekennzeichnet, dass** als Magnetwerkstoff Neodym-Eisen-Bor (NdFeB) verwendet wird, und dass die Permanentmagnete (14) in einen Ring eingesetzt und vollständig in dem Ring eingeschlossen sind, der in das Polgehäuse (9) einsetzbar ist.

## Claims

1. Motorized drive unit in a windscreen wiper apparatus (1) in a vehicle, having a permanent-magnet DC motor (4) comprising an armature (5), which is rotatably mounted in a pole housing (9), having at least one coil winding, to which electrical power can be applied, and permanent magnets (14) on the housing wall of the pole housing (9), with the armature (5) being coupled to an output shaft (7) via a gear unit (6), the said output shaft operating a wiper arm (3), **characterized in that** the DC motor (4) has at least four permanent magnets (14) on the housing wall, the said permanent magnets interacting with the armature (5), and **in that** the permanent magnets (14) are inserted into a ring and are fully enclosed in the ring which can be inserted into the pole housing (9).

2. Drive unit according to Claim 1, **characterized in that** the magnetic material used is neodymium-iron-boron (NdFeB).

3. Drive unit according to Claim 1 or 2, **characterized in that** the magnetic material is isotropic.

4. Drive unit according to Claim 1 or 2, **characterized in that** the magnetic material is anisotropic.

5. Drive unit according to one of Claims 1 to 4, **characterized in that** the permanent magnets (14) are inserted into a plastic ring.

6. Drive unit according to one of Claims 1 to 5, **characterized in that** the permanent magnets (14) are coated with a protective layer, for example with nickel.

7. Drive unit according to one of Claims 1 to 6, **characterized in that** the permanent magnets (14) are of thin-walled design.

8. Motorized drive unit in a windscreen wiper apparatus (1) in a vehicle, in particular according to one of Claims 1 to 7, having a permanent-magnet DC motor (4) comprising an armature (5), which is rotatably mounted in a pole housing (9), having at least one coil winding, to which electrical power can be applied, and permanent magnets (14) on the housing wall of the pole housing (9), with the armature (5) being coupled to an output shaft (7) via a gear unit (6), the said output shaft operating a wiper arm (3), with the DC motor (4) having at least two permanent magnets (14) on the housing wall, the said permanent magnets interacting with the armature (5), **characterized in that** the magnetic material used is neodymium-iron-boron (NdFeB), and **in that** the permanent magnets (14) are inserted into a ring and are fully enclosed in the ring which can be inserted into the pole housing (9).

## Revendications

1. Unité d'entraînement par moteur pour un ensemble d'essuie-glace (1) pour véhicule, l'unité présentant un moteur (4) à courant continu et excitation permanente constitué d'un induit (5) monté à rotation dans un boîtier polaire (9) et présentant au moins un enroulement de bobine alimenté en électricité et des aimants permanents (14) prévus sur la paroi du boîtier polaire (9), l'induit (5) étant accouplé par l'intermédiaire d'une unité de transmission (6) à un arbre entraîné (7) qui actionne un bras (3) d'essuie-glace,
**caractérisée en ce que**
le moteur (4) à courant continu présente au moins quatre aimants permanents (14) sur la paroi du boîtier, ces aimants coopérant avec l'induit (5), et
**en ce que** les aimants permanents (14) sont insérés dans un anneau et sont complètement englobés dans l'anneau qui peut être inséré dans le boîtier polaire (9).

2. Unité d'entraînement selon la revendication 1, **caractérisée en ce qu'**elle utilise comme matériau magnétique un néodyme-fer-bore (NdFeB).

3. Unité d'entraînement selon les revendications 1 ou 2, **caractérisée en ce que** le matériau magnétique est isotrope.

4. Unité d'entraînement selon les revendications 1 ou 2, **caractérisée en ce que** le matériau magnétique est anisotrope.

5. Unité d'entraînement selon l'une des revendications 1 à 4, **caractérisée en ce que** les aimants permanents (14) sont insérés dans un anneau en matière synthétique.

6. Unité d'entraînement selon l'une des revendications 1 à 5, **caractérisée en ce que** les aimants permanents (14) sont revêtus d'une couche de protection, par exemple de nickel.

7. Unité d'entraînement selon l'une des revendications 1 à 6, **caractérisée en ce que** les aimants permanents (14) sont à parois minces.

8. Unité d'entraînement par moteur pour un ensemble d'essuie-glace (1) pour véhicule, en particulier selon l'une des revendications 1 à 7, l'unité présentant un moteur (4) à courant continu et excitation permanente constitué d'un induit (5) monté à rotation dans un boîtier polaire (9) et présentant au moins un enroulement de bobine alimenté en électricité et des aimants permanents (14) prévus sur la paroi du boîtier polaire (9), l'induit (5) étant accouplé par l'intermédiaire d'une unité de transmission (6) à un arbre entraîné (7) qui actionne un bras (3) d'essuie-glace,
le moteur (4) à courant continu présentant au moins deux aimants permanents (14) sur la paroi du boîtier, ces aimants coopérant avec l'induit (5), **caractérisée en ce que**
l'unité utilise comme matériau magnétique un néodyme-fer-bore (NdFeB) et **en ce que** les aimants permanents (14) sont insérés dans un anneau et sont complètement englobés dans l'anneau qui peut être inséré dans le boîtier polaire (9).
